# EUROPÄISCHE PATENTSCHRIFT

(11) **EP 1 886 960 B1**
(45) Veröffentlichungstag und Bekanntmachung des Hinweises auf die Patenterteilung: **07.07.2010**
(21) Anmeldenummer: 07113973.7
(22) Anmeldetag: 08.08.2007
(51) Int. Cl.: B66B 7/06, B29D 29/10, D07B 1/22

(54) **Aufzuganlage mit einem Aufzugtragmittel**
Lift system with load-bearing mechanism
Installation d'élévation dotée d'un moyen de support d'élévation

(30) Priorität: 11.08.2006 EP 06118817
(43) Veröffentlichungstag der Anmeldung: 13.02.2008
(73) Patentinhaber: Inventio AG, 6052 Hergiswil (CH)
(72) Erfinder: Ach, Ernst, 6030 Ebikon (CH)

(56) Entgegenhaltungen:
- EP-A- 1 477 449
- EP-A- 1 547 960
- EP-A- 1 674 419
- EP-A1- 1 396 659
- WO-A-2006/042427
- DE-B- 1 141 443
- DE-C- 438 102
- US-A- 3 948 113
- US-A- 4 011 766
- US-A- 4 231 826
- US-A- 4 956 036

## Beschreibung

Die vorliegende Erfindung betrifft eine Aufzuganlage mit einem Aufzugtragmittel.

Eine Aufzugsanlage umfasst eine Aufzugskabine und in der Regel ein Gegengewicht, die in einem Aufzugsschacht oder entlang freistehender Führungseinrichtungen bewegbar sind. Zum Erzeugen der Bewegung weist die Aufzugsanlage mindestens eine Antriebseinheit mit mindestens einem Treibrad auf, das über ein oder mehrere Aufzugtragmittel in Form von Riemen die Aufzugkabine und das Gegengewicht tragen und/oder die erforderlichen Antriebskräfte auf diese übertragen.

Aus der EP 1 555 234 B1 ist eine Aufzuganlage bekannt, bei der der Riemen auf einer dem Treibrad zugewandten Traktionsseite eine Rippenanordnung mit mehreren sich in Längsrichtung des Riemens erstreckende keilförmige Rippen aufweist, die in entsprechende Rillen auf dem Treibrad eingreifen. Dadurch, dass der Kontakt zwischen dem Riemen und dem Treibrad über die schrägen Flanken der keilförmigen Rippen bzw. Rillen erfolgt, erhöht sich bei gleicher Radialkraft und mithin gleicher Lagerbelastung und Riemenspannung der Anpressdruck an das Treibrad und damit die Traktions- bzw. Treibfähigkeit. Gleichzeitig führen die Keilrippen den Riemen vorteilhaft in Querrichtung auf dem Treibrad. Da die Riemen Zugträger mit relativ geringen Durchmessern enthalten, ist es möglich, Treibräder mit kleineren Durchmessern einzusetzen. Insbesondere kann auch die Abtriebswelle der Antriebseinheit selbst als Treibrad ausgebildet sein.

Eine einzelne, frei bewegliche Keilrippe zentriert sich in einer entsprechenden Rille eines Treibrades oder eines Umlenkrades aufgrund der schrägen Flanken vorteilhaft selbst, wobei durch ein unterschiedlich tiefes radiales Eingreifen der Keilrippe in die Rille auch Fertigungstoleranzen und Verschleiß des die Keilrippe aufweisenden Riemens und/oder des Treibrades von selbst ausgeglichen werden. So liegt beispielsweise ein Keilriemen, der durch Verschleiß an seinen Keilflanken eine gegenüber dem Nennmaß geringere Breite aufweist, in einer komplementären Rille, die aufgrund von Fertigungstoleranzen eine gegenüber ihrem Nennmaß größere Breite aufweist, in radialer Richtung tiefer auf. Gleichwohl liegt der Riemen aufgrund der Keilflanken zentriert unter Reibschluss in der Rille des Treibrades. Insgesamt kann eine frei bewegliche Keilrippe Formabweichungen, die sich aus Fertigungstoleranzen der Rippe und/oder der zugehörigen Rille in dem Treibrad, aber auch aus einem Verschleiß von Rippe und/oder Rille ergeben, ausgleichen. Gleichermaßen können mehrere zueinander bewegliche Keilrippen Lageabweichungen, insbesondere unterschiedliche Abstände der Rippen und Rillen zueinander in Riemenquerrichtung, aber auch in radialer Richtung des Treibrades, ausgleichen.

Umfasst die Rippenanordnung, wie in der EP 1 555 234 B1, mehrere auf demselben Riemenkörper ausgebildete Keilrippen, ist diese Selbstzentrierung und der Ausgleich von Abweichungen in der Form und/oder Lage der einzelnen Rippen und zugehörigen Rillen nicht mehr möglich. Zudem führen Abweichungen der Abstände der einzelnen Rippen und/oder Rillen zueinander nachteilig dazu, dass nicht alle Keilrippen in homogenem Eingriff mit den zugehörigen Rillen stehen.

Der Riemenkörper ist in der Regel aus einem Elastomer hergestellt, der aufgrund seiner Elastizität zwar eine gewisse Relativbewegung der einzelnen Rippen zueinander gestattet und so die oben beschriebene Selbstzentrierung und den Ausgleich von Lage- und Formabweichungen der Rippen und Rillen in beschränktem Umfang ermöglicht. Nachteilig ist, dass dieser Ausgleich nur in engen Grenzen und unter deutlicher elastischer Verformung des Riemenkörpers möglich ist, wobei diese Verformung aufgrund der damit verbundenen wechselnden Zug-, Druck- und Schubspannungen zu einer vorzeitigem Alterung des Riemens führt. Dies bedingt einen höheren Wartungsaufwand für die Aufzuganlage, da der Riemen öfter kontrolliert und ausgewechselt werden muss. Zudem erhöht die elastische Verformung des Riemenkörpers die Gefahr, daß einzelne Rippen nicht vollständig in den Rillen anliegen, sondern sich zum Teil aus diesen herausarbeiten, wodurch die Führung des Riemens auf der.

Aus der US 3,996,813 ist ein Riemen für einen Riemenantrieb bekannt, der einzelne, nur durch ein Trägerband aus einem Elastomer verbundene Keilrippen mit darin angeordneten Zugträgern aufweist. Im Gegensatz zu einer Aufzuganlage, bei der sich die relative Position zwischen Treib- und Umlenkrädern, über die der Riemen umläuft, ständig ändert, liegen bei dem Riemenantrieb der US 3,996,813 die treibende und die angetriebene Treibscheibe inertial fest, so dass hier kein hohe Steifigkeit in Riemenquerrichtung notwendig ist. Auch treten in einem solchen Riemenantrieb keine veränderlichen Trumlängen auf, wie sie sich in einer Aufzuganlage ergeben und den Einsatz von Riemen, die in Querrichtung weich sind, erschweren. Denn bei großen freien Trumlängen und sich relativ zueinander bewegenden Treib- bzw. Umlenkrädern neigen weiche Riemen zu einem Verdrillen um ihre Längsachse und einer Biegung in Querrichtung. Zudem wird in dem aus der US 3,996,813 angesprochenen Riemenantrieb der Riemen nur über seine Traktionsseite umgelenkt, so dass seine dieser abgewandte Riemenrückseite berührungslos ist, während in Aufzuganlagen mit festen und freien Umlenkrädern das Aufzugtragmittel häufig auch Umlenkräder mit seiner Riemenrückseite umschlingt.

Dementsprechend schlägt die Druckschrift auch ein elastomeres, mit Reifencord-Fäden verstärktes Trägerband vor, dass sich zwar gut mit den elastomeren Keilrippen verbindet, jedoch nur eine geringe Querstabilität und Abriebfestigkeit auf der Riemenrückseite aufweist. Mithin ist der aus der US 3,996,813 bekannte Riemen für die Anwendung in einer Aufzuganlage, bei der die zum Teil langen Trumbereiche zwischen Treib- und Umlenkrädern, die variablen Trumlängen sowie die Umlenkung auch über die Riemenrückseite höhere Anforderungen an die Querstabilität und Abriebfestigkeit des Riemens stellen, nicht geeignet.

Aus WO 2006/042427 A1 ist ein Aufzug mit Flachriemen als Tragmittel bekannt. Die Flachriemen können eine Führungsnut aufweisen. Eine Führungsrippe auf der Riemenscheibe, welche im Betrieb in die Führungsnut des Flachriemens eingreift, erlaubt ein verschleissarmes Führen des Flachriemens auf der Riemenscheibe.

In US 3948113 ist ein Transmissionsriemen zur übertragung von Antriebskräften beschrieben. Dieser Antriebsriemen weist einen kontinuierlichen einzelnen Körper mit einer Oberseite und einer Unterseite auf. Mehrere kraftübertragende Rippen erstrecken sich in Längsrichtung des Antriebsriemens.

Aufgabe der vorliegenden Erfindung ist es, eine aus der EP 1 555 234 B1 bekannte Aufzuganlage wartungsärmer auszubilden.

Diese Aufgable wird durch die Merkmale des Anspruchs 1 gelöst.

Die erfindungsgemäße Aufzugsanlage umfasst eine Antriebseinheit, welche über ein Treibrad mindestens ein eine Aufzugskabine tragendes Aufzugtragmittel antreibt, wobei das Aufzugtragmittel auf einer dem Treibrad zugewandten Traktionsseite eine Rippenanordnung mit wenigstens zwei sich in Längsrichtung des Aufzugtragmittels erstreckende Rippen aufweist, die in entsprechende Rillen auf dem Treibrad eingreifen. Zur Übertragung der Zugkraft im Aufzugtragmittel umfasst die Riemenanordnung eine Zugträgeranordnung mit wenigstens einem Zugträger, der in einer Rippe angeordnet ist.

In einer bevorzugten Ausführung ist in jeder Rippe wenigstens ein, besonders bevorzugt mehr als ein Zugträger zugeordnet. In einer alternativen Ausführung ist nicht jeder der Rippen ein Zugträger zugeordnet. Die Rippen, die keinen Zugträger aufweisen, können nur einen kleinen Teil der Zugkraft des Aufzugtragmittels übertragen, dienen jedoch der Führung und Zentrierung des Riemens in Querrichtung.

Es wird dabei vorgeschlagen, dass zwischen wenigstens zwei benachbarten Rippen der Rippenanordnung eine Nut ausgebildet ist, die im Wesentlichen bis zu einem auf der der Traktionsseite abgewandten Riemenrückseite des Aufzugtragmittels angeordneten Trägerband reicht, an dem die Rippen der Rippenanordnung befestigt sind.

Hierdurch können sich die beiden durch die Nut getrennten Rippen in Quer- und/oder Hochrichtung des Aufzugtragmittels relativ zueinander bewegen. Dies ermöglicht es den mindestens zwei benachbarten Rippen, Abweichungen in der Form, insbesondere der Breite der jeweiligen Rippe zur zugehörigen Rille des Treibrades und/oder Abweichungen der Lage der Rippen und/oder Rillen zueinander durch diese Relativbewegung auszugleichen und sich in den Rillen zu zentrieren, ohne den Rippenkörper zu verformen. Dies verringert die in den Rippen auftretenden Spannungen und erhöht damit deren Lebensdauer. In der Folge verringert sich der Wartungsaufwand der Aufzuganlage aufgrund der längeren Inspektionsintervalle und des selteneren Austauschs des Riemens.

In einer bevorzugten Ausführung sind alle Rippen der Rippenanordnung jeweils durch Nuten voneinander getrennt. Dies ermöglicht den oben erläuterten Ausgleich der Lage- und Formtoleranzen zwischen allen Rippen.

In einer alternativen Ausführung der vorliegenden Erfindung sind nicht alle Rippen der Rippenanordnung durch jeweils eine Nut voneinander getrennt. Auch bei dieser Ausführungsform ist noch ein Ausgleich der Lageabweichungen der durch die Nut(en) getrennten Rippenblöcke möglich, wodurch insbesondere vermieden wird, dass sich aufgrund der Lage- und/oder Formabweichungen hohe Materialspannungen über die gesamte Breite des Riemens ausbilden. Stattdessen treten aufgrund der kleineren Lageabweichungen innerhalb eines Rippenblocks jeweils nur geringere Verformungen auf. Andererseits vermindern weniger Nuten die Quersteifigkeit des Riemens entsprechend weniger. Beispielsweise ist nur zwischen den beiden mittleren Rippen des Aufzugtragmittels eine Nut ausgebildet.

Bevorzugt reichen die Nuten bis zum genannten Trägerband, so dass die durch eine Nut voneinander getrennten benachbarten Rippen vollständig voneinander getrennt sind. Dies gestattet eine maximale Beweglichkeit der Rippen zueinander, wobei elastische Verformungen des Rippenkörpers reduziert werden. Zur Erhöhung der Quersteifigkeit, aber auch zur besseren Befestigung der Rippen am Trägerband können die Nuten aber auch kurz vor dem Trägerband enden, so dass auf dem Trägerband ein dünner, die Rippen verbindender Steg aus Rippenmaterial verbleibt. Hierdurch wird eine größere Verbindungsfläche zwischen Rippen und Trägerband zur Verfügung gestellt. Vorteilhafterweise hat ein solcher Steg in etwa die Dicke des Trägerbandes.

Die Rippen der Rippenanordnung weisen bevorzugt einen Kontaktabschnitt mit einem im Wesentlichen trapezförmigen bzw. keilförmigen Querschnitt zum Eingriff in die entsprechenden Rillen des Treibrades auf. Bei solchen Keilrippen erhöht sich bei gleicher Radialkraft, d.h. bei gleicher Lagerbelastung und Riemenspannung die Anpresskraft des Riemens an das Treibrad und damit die Treib- bzw. Traktionsfähigkeit. Als besonders günstig haben sich dabei Querschnitte mit einem Flankenwinkel zwischen 60° und 120°, bevorzugt 75° und 105° und besonders bevorzugt 90° herausgestellt.

Die Keilflanken dieser Keilrippen können beinahe bis zum Trägerband reichen, was die Kontaktfläche zu den Flanken der Treibradrillen maximiert. Dies verringert einerseits aufgrund der größeren Kontaktfläche den Verschleiß der reibschlüssig zusammenwirkenden Rippen und Rillen. Andererseits wird bei gleichem Rippenabstand und gleichem Keilwinkel die Höhe der Rippen und damit ihre Fähigkeit, Lage- und Formabweichungen ausgleichen können, reduziert.

In einer alternativen Ausgestaltung weisen die Rippen der Rippenanordnung einen zwischen dem Kontaktabschnitt und dem Trägerband liegenden Sockelabschnitt auf, dessen Flanken einen anderen Winkel zum Trägerband aufweisen als die Keilflanken des Kontaktabschnitts. Insbesondere kann der Sockelabschnitt einen im Wesentlichen rechteckförmigen Querschnitt oder einen trapezförmigen Querschnitt mit geringerem Flankenwinkel, d.h. mit steileren Flanken aufweisen. Dies ermöglicht die Ausbildung höherer und weniger biegesteifer Rippen, die besonders geeignet sind, allenfalls vorhandene Lage- und Formabweichungen zwischen den Rippen des Riemens und den Rillen der Treib- bzw. Umlenkräder auszugleichen. Eng benachbarte Seitenflächen von relativ hohen Sockelabschnitten erhöhen auch die Quersteifigkeit des Riemens, da sich die gegenüberliegenden Flanken schmaler Nuten schon bei relativ geringer Verkippung benachbarter Rippen berühren. Damit wird insbesondere in den langen freien Trumabschnitten, die sich bei einer Aufzuganlage mit einer Kabine im obersten bzw. untersten Stockwerk ergeben, ein übermäßiges Verdrillen des Riemens um seine Längsachse vermieden. Vorteilhafterweise beträgt die Nutbreite, d.h. der engste Abstand zwischen gegenüberliegenden Flanken benachbarter Rippen ungefähr 10%, bevorzugt 5% und besonders bevorzugt 2,5% der (maximalen) Rippenbreite. insbesondere Polyamid (PA), Polypropylen (PP), Polyethylen (PE), Polycarbonat (PC) oder Polyvinylchlorid (PVC) oder Polyblend und/oder aus einem Gewebe aus einem solchen thermoplastischen Kunststoff

Erfindungsgemäß sind die Zugträger in den Rippen angeordnet und berühren das Trägerband. Auf diese Weise stützen die Zugträger das Trägerband, das dementsprechend dünn und flexibel ausgebildet werden kann. Gleichermaßen erhöhen die am Trägerband und damit am damit verbundenen Boden der einzelnen Rippen angeordneten Zugträger die Steifigkeit des Bodenbereichs der Rippen. Dadurch verringern sich die Verformungen, insbesondere Verwölbungen der Verbindungsfläche der Rippen zum Trägerband, was die Beanspruchung der Verbindung verringert und so einem Ablösen der Rippen vom Trägerband entgegenwirkt. Im Gegensatz dazu ist der zugträgerfreie obere Bereich der Rippen entsprechend elastischer und kann die aus der Riemenbiegung resultierenden Druck- bzw. Zugverformungen aufnehmen sowie die vorstehend erwähnten Form- und Lageabweichungen besser ausgleichen. Vorzugsweise sind die Zugträger in der neutralen Faser des Riemens oder in deren Nähe angeordnet.

Bei der Herstellung des Riemens können die Zugträger vorteilhafterweise unter Vorspannung auf das Trägerband gepresst werden, bevor die Rippen derart auf das Trägerband aufgebracht werden, dass sie die Zugträger vollständig umschließen. Durch die Vorspannung werden die Zugträger während des Herstellprozesses lagerichtig auf dem Trägerband fixiert. Die Vorspannung der Zugträger ermöglicht es, dem Riemen zum Beispiel eine konkave Eigenkrümmung zur Traktionsseite hin aufzuprägen, was bei Aufzugsanlagen sinnvoll sein kann, bei denen die Treib- und Umlenkräder so angeordnet sind, dass der Riemen stets im gleichen Biegesinn gebogen wird.

Die Zugträger der Zugträgeranordnung können als Einfachdraht ausgebildet sein oder aus ein- oder mehrfach verseilten Litzen oder Seilen bestehen, wobei die Litzen bzw. Seile aus Stähldrähten oder Kunststofffasern hergestellt sein können. Es ist auch möglich, verschiedene Zugträger unterschiedlich auszubilden. Hierdurch und/oder durch die Anordnung unterschiedlicher Zugträgerzahlen in den einzelnen Rippen kann dem Riemen eine Steifigkeitsverteilung vorgegebene werden. So kann beispielsweise eine Rippe zwei oder mehrere zwei- oder mehrfach verseilte Einzeldrähte aufweisen, während in einer anderen Rippe weniger Zugträger angeordnet sind, die wiederum weniger Einzeldrähte aufweisen. So kann beispielsweise erreicht werden, dass die Längssteifigkeit des Riemens von der Riemenmitte zum Riemenrand hin abnimmt, wodurch bei einer leichten Schiefstellung der Achsen der Treib- bzw. Umlenkräder oder auch bei leichtem Achsversatz die außen liegenden Rippen des Riemens aufgrund ihrer geringeren Steifigkeit diese Abweichungen ausgleichen.

In einer bevorzugten Ausführung sind die Rippen aus einem ersten Material hergestellt, das ein Elastomer, insbesondere Polyurethan, Polychloropren und/oder Ethylen-Propylen-Dien-Kautschuk umfasst. Rippen aus elastomerem Material können aufgrund ihrer Elastizität Form- und Lageabweichungen in gewissem Maße ausgleichen und verringern so die hierzu notwendige Relativbewegung der Rippen zueinander. Gleichzeitig sind sie besonders geeignet für den reibschlüssigen Kontakt mit einem Treibrad und für die Übertragung der Zugkräfte von diesem auf die Zugträger. Zusätzlich dämpfen sie vorteilhaft Schwingungen und Stöße und erhöhen so den Komfort der Aufzuganlage. Als besonders günstig haben sich dabei Rippen mit einer Härte von 70 bis 100 Shore (A), bevorzugt 75 bis 95 Shore (A) und besonders bevorzugt eine Härte von 80 bis 85 Shore (A) erwiesen. Aufgrund der erfindungsgemäßen Trennung der Rippen durch Nuten müssen die Rippen sich bei Form- und/oder Lageabweichungen von Rippen und Rillen nicht oder nur geringfügig verformen, so daß die vorgenannten, relativ steifen bzw. harten Elastomere eingesetzt werden können.

Vorteilhafterweise ist das Trägerband aus einem zweiten Material hergestellt, das einen thermoplastischen Kunststoff, insbesondere Polyamid (PA), Polypropylen (PP), Polyethylen (PE), Polycarbonat (PC) oder Polyvinylchlorid (PVC) oder Polyblend und/oder aus einem Gewebe aus einem solchen thermoplastischen Kunststoff umfasst. Gleichermaßen kann auch eine Mischung verschiedener thermoplastischer Kunststoffe, ein so genannter Polyblend eingesetzt werden. Bevorzugt kann das zweite Material auch ein Gewebe aus einem solchen thermoplastischen Kunststoff umfassen.

Die genannten thermoplastischen Kunststoffe weisen im Gegensatz zu Elastomeren eine ausreichende Festigkeit auf, um die zwischen den einzelnen Rippen auftretenden Spannungen in Riemenquerrichtung (aufgrund von Form- und/oder Lageabweichungen), aber auch Scherspannungen aufgrund unterschiedlicher Rillendurchmesser bzw. Rippenhöhen oder einem Querlauf des Riemens zu ertragen. Sofern beispielsweise ein Rillendurchmesser und/oder eine Rippenhöhe geringer sind als Durchmesser bzw. Höhe einer benachbarten Rille bzw. Rippe, so verringert sich die Umlaufgeschwindigkeit dieser Rippe gegenüber der Nachbarrippe entsprechend, was zu einer Scherspannung in dem diese verbindenden Trägerband führt.

Im Gegensatz zu einem elastomeren Trägerband, wie es aus der US 3,996,813 bekannt ist, braucht ein thermoplastisches Trägerband nach der vorliegenden Erfindung nicht notwendigerweise mit Corden in Riemenquerrichtung verstärkt werden. Eine solche Verstärkung ist natürlich möglich und gestattet ein entsprechend dünneres Trägerband.

Ein weiterer Vorteil eines thermoplastischen Trägerbandes liegt in seinen guten Gleiteigenschaften, insbesondere seiner Abriebfestigkeit und/oder seines niedrigen Reibwertes. Wenn beispielsweise, wie es bei Aufzuganlagen häufig der Fall ist, das Aufzugtragmittel zur flaschenzugartigen Reduzierung der Zugkräfte ein- oder mehrfach über feste oder lose Umlenkräder umgelenkt wird, wobei es mit seiner der Traktionsseite abgewandten Riemenrückseite die Umlenkräder teilweise umschlingt, reduziert ein thermoplastisches Trägerband vorteilhaft die zwischen den Umlenkrädern und dem Riemen auftretende Reibung. Vorteilhafterweise verringert sich dadurch insbesondere die Reibkraft, die zum seitlichen Führen des Riemens auf einem Umlenkrad zu überwinden ist, somit die seitliche Belastung des Riemens, beispielsweise durch Führungsbordscheiben von Umlenkrädern und in der Folge auch die erforderliche Antriebsleistung der Aufzugsanlage. Gleichzeitig verlängert sich die Lebensdauer des Riemens wie auch diejenige der Umlenkräder. Gleichzeitig wird die Abriebfestigkeit der Riemenrückseite verbessert, so daß sich wiederum die Lebensdauer des Aufzugtragmittels erhöht. Vorteilhafterweise kann die Riemenrückseite des thermoplastischen Trägerbandes hierzu einen Reibwert von höchstens 0,4, bevorzugt höchstens 0,3 und besonders bevorzugt höchstens 0,25 aufweisen.

Um die Belastung des Trägerbands möglichst gering zu halten, können die Rippen in einem Abstand zueinander auf diesem angeordnet sein, der, vorteilhaft geringfügig, größer als der Abstand der zugehörigen Rillen des Treibrades zueinander ist. Sofern keine Lage- oder Formabweichungen vorliegen, ist das Trägerband zwischen den Rippen entspannt und kann sich aufgrund seiner Elastizität entsprechend falten bzw. wölben. In diesem Zustand teilt sich die Zugkraft entsprechend gleichmäßig auf die einzelnen Riemen auf, die diese vermittels ihrer Zugträger übertragen. Sofern sich Rippen aufgrund einer Lage- und/oder Formabweichung von Rippen und/oder Rillen aufeinander zu bewegen, wöbt bzw. faltet sich das Trägerband entsprechend stärker, ohne den Betrieb der Aufzuganlage zu beeinträchtigen. Hierzu kann das Trägerband vorteilhaft eine Vorspannung in Riemenquerrichtung aufweisen, die zu einer konkaven Wölbung des Trägerbandes von dem Treibrad weg führt. Sofern sich die Rippen aufgrund einer Lage- und/oder Formabweichung von Rippen und/oder Rillen voneinander weg bewegen, wird zunächst das lose Trägerband zwischen den Rippen straff gezogen, so dass das Trägerband selbst noch nicht elastisch verformt wird. Dies vermindert vorteilhaft die elastische Verformung des Trägerbandes und erhöht so dessen Lebensdauer. Gleichwohl gestattet das Trägerband aufgrund seiner Elastizität in Querrichtung auch eine Auseinanderbewegung der Rippen über die Stellung, in der das Trägerband vollständig gestrafft ist, hinaus und schafft so unter gleichzeitiger Minimierung der im Betrieb auftretenden Verformung des Trägerbandes einen weiten Ausgleichsbereich.

Um die vorstehend beschriebenen Wirkungen des Trägerbands zu gewährleisten, weist dieses eine Dicke von höchstens 0.5 mm oder von höchstens einem Zehntel der gesamten Riemendicke auf.

Bevorzugt wird ein erfindungsgemäßes Aufzugtragmittel dadurch hergestellt, dass zunächst die Zugträger auf dem Trägerband angeordnet werden und anschließend die Rippen auf das Trägerband aufgebracht werden - beispielsweise mittels eines Extrusionsverfahrens - wobei zwischen wenigstens zwei benachbarten Rippen eine Nut ausgebildet ist, die im Wesentlichen bis zum Trägerband reicht. Dabei werden gleichzeitig die Zugträger in den Rippen aufgenommen. In einer vorteilhaften Ausführung werden hierzu die Zugträger unter Vorspannung auf das Trägerband gepresst, um sie während des Herstellvorgangs des Riemens lagerichtig zu fixieren.

Bevorzugt enthält dabei das erste Material einen Kleber, der beim Aufextrudieren die Rippen mit dem Trägerband thermisch verklebt. In einer alternativen Ausführung werden zunächst die einzelnen Rippen extrudiert, wobei ihnen die Zugträger zugeführt werden. Anschließend werden die Rippen durch thermisches Kleben mit dem Trägerband verbunden.

Weitere Aufgaben, Merkmale und Vorteile ergeben sich aus den Unteransprüchen und den nachfolgend beschriebenen Ausführungsbeispiele. Hierzu zeigt:
- Fig. 1: einen zu einer Aufzugskabinenfront parallelen Schnitt durch eine Aufzugsanlage nach einer Ausführung der vorliegenden Erfindung; und
- Fig. 2: einen Querschnitt durch einen Riemen nach einer Ausführung der vorliegenden Erfindung.

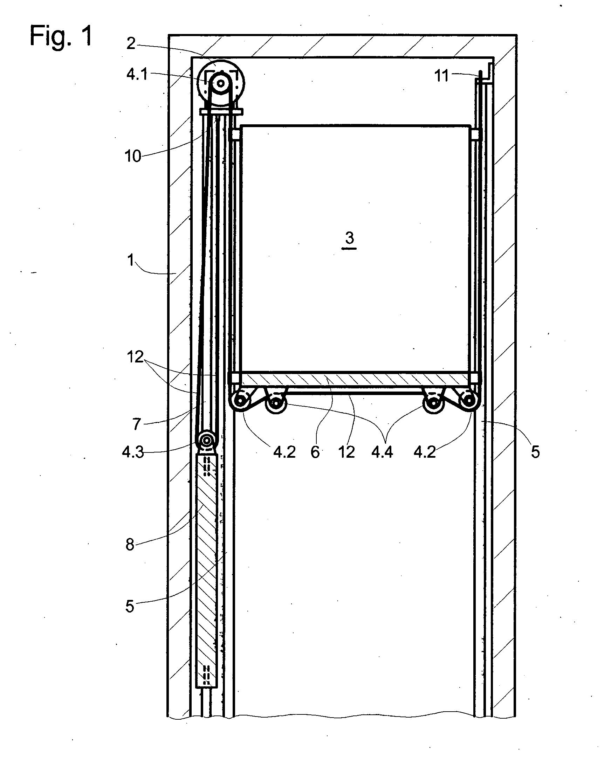

Fig. 1 zeigt schematisch einen Schnitt durch ein in einem Aufzugsschacht 1 installiertes Aufzugssystem mit dem Riemen 12. Das Aufzugssystem umfasst einen in einem Aufzugsschacht 1 fixierte Antriebseinheit 2 mit einem Treibrad 4.1, eine an Kabinenführungsschienen 5 geführte Aufzugskabine 3 mit unterhalb des Kabinenbodens 6 angebrachten Umlenkrädern in Form von Kabinentragrollen 4.2, ein an Gegengewichtsführungsschienen 7 geführtes Gegengewicht 8 mit einem weiteren Umlenkrad in Form einer Gegengewichtstragrolle 4.3, und ein Aufzugtragmittel in Form eines Riemens 12 für die Aufzugskabine 3 und das Gegengewicht 8, der die Antriebskraft von dem Treibrad 4.1 der Antriebseinheit 2 auf die Aufzugskabine und das Gegengewicht überträgt.

Der Riemen 12 ist an einem seiner Enden unterhalb des Treibrades 4.1 an einem ersten Riemenfixpunkt 10 befestigt. Von diesem aus erstreckt er sich abwärts bis zu der Gegengewichtstragrolle 4.3, umschlingt diese und erstreckt sich von dieser aus zum Treibrad 4.1, umschlingt dieses und verläuft entlang der gegengewichtsseitigen Kabinenwand abwärts, umschlingt auf beiden Seiten der Aufzugskabine je eine unterhalb der Aufzugskabine 3 angebrachte Kabinentragrolle 4.2 um je 90° und verläuft entlang der dem Gegengewicht 8 abgewandten Kabinenwand aufwärts zu einem zweiten Riemenfixpunkt 11.

Die Ebene des Treibrades 4.1 kann rechtwinklig zur gegengewichtsseitigen Kabinenwand angeordnet sein und ihre Vertikalprojektion kann außerhalb der Vertikalprojektion der Aufzugskabine 3 liegen. Es ist daher zu bevorzugen, dass das Treibrad 4.1 einen geringen Durchmesser aufweist, damit der Abstand zwischen der linksseitigen Kabinenwand und der dieser gegenüber liegenden Wand des Aufzugsschachts 1 möglichst klein sein kann. Außerdem ermöglicht ein geringer Treibraddurchmesser die Verwendung eines getriebelosen Antriebsmotors mit relativ geringem Antriebsdrehmoment als Antriebseinheit 2.

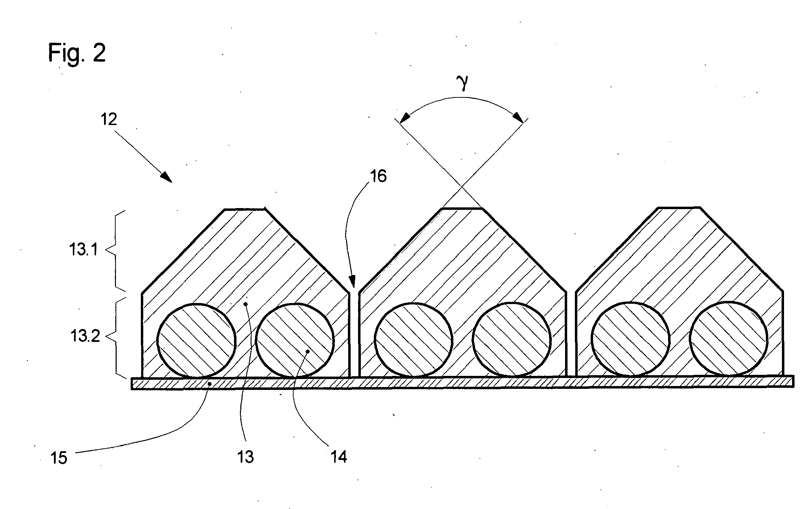

Fig. 2 zeigt einen Querschnitt durch den Riemen 12. Dieser weist ein Trägerband 15 aus Polyamid auf, das beispielsweise im Extrudierverfahren hergestellt ist. Auf dieses Trägerband 15 werden anschließend unter Vorspannung Zugträger 14 aus mehrfach verseilten Stahldrähten gepreßt und so in ihrer Lageanordnung zueinander fixiert. Anschließend werden einzelne Rippen 13 aus Polyurethan auf das Trägerband aufextrudiert und dabei mit diesem verbunden, wobei das aufextrudierte Rippenmaterial die satt am Trägerband 15 anliegenden Zugträger 14 teilweise umschliesst.

Jede Rippe 13 ist von ihren benachbarten Rippen durch eine Nut 16 getrennt, die im Ausführungsbeispiel bis zum Trägerband 15 reicht, so daß jede Rippe 13 separat am Trägerband 15 befestigt ist. In jeder Rippe sind je zwei Zugträger 14 symmetrisch aufgenommen.

Eine Rippe 13 umfasst im Ausführungsbeispiel einen mit dem Trägerband 15 durch Aufextrudieren verbundenen Sockelabschnitt 13.2 mit im Wesentlichen rechteckigem Querschnitt, dessen Seitenflanken die Nuten 16 definieren. Kontinuierlich mit diesem Sockelabschnitt 13.2 ist ein Kontaktabschnitt 13.1 mit trapezförmigem Querschnitt ausgebildet, der zum reibschlüssigen Eingriff in eine entsprechend geformte Rille des Treibrades 4.1 vorgesehen ist.

Die einzelnen Keilrippen 13 sind unter Verformung des Trägerbandes 15 relativ zueinander beweglich und können so Lage- und Formabweichungen der Rippen und Rillen ausgleichen. Insbesondere können zwei benachbarte Keilrippen ihren Abstand voneinander sowohl in Quer- als auch Hochrichtung des Riemens 12 verändern und so in unterschiedlich weit beabstandete, unterschiedlich tiefe und/oder unterschiedlich geformte Rillen im Treibrad 4.1 eingreifen.

Das Treibrad 4.1 und die Gegengewichtstragrolle 4.3 sind an ihrer Peripherie mit Rillen versehen, die im Wesentlichen komplementär zu den Kontaktabschnitten 13.1 des Riemens 12 geformt sind. Wo der Riemen 12 eines der Riemenräder 4.1 oder 4.3 umschlingt, liegen die Kontaktabschnitte in korrespondierenden Rillen des Riemenrades, wodurch eine ausgezeichnete Führung des Riemens auf diesen Riemenrädern gewährleistet ist. Außerdem wird durch die zwischen den Rillen des Treibrades 4.1 und den Rippen des Riemens 12 entstehende Keilwirkung die Traktionsfähigkeit verbessert.

Die Kabinentragrollen 4.2 werden vom Riemen 12 so umschlungen, dass der durch das Trägerband 15 gebildete unprofilierte Riemenrücken mit den Kabinentragrollen in Kontakt steht. Um die Seitenführung des Riemens 12 auf den Kabinentragrollen 4.2 zu gewährleisten, sind am Kabinenboden 6 zwei mit Rillen versehene Führungsrollen 4.4 angebracht, deren Rillen mit den Rippen des Riemens 12 zusammenwirken.

## Patentansprüche

1. Aufzugsanlage mit einer Antriebseiheit (2), die über ein Treibrad (4.1) mindestens ein eine Aufzugskabine (3) tragendes Aufzugtragmittel (12) antreibt, wobei das Aufzugtragmittel auf einer dem Treibrad (4.1) zugewandten Traktionsseite eine Rippenanordnung mit wenigstens zwei sich in Längsrichtung des Aufzugtragmittels erstreckende Rippen (13) aufweist, die in entsprechende Rillen auf dem Treibrad eingreifen, wobei die Rippenanordnung eine Zugträgeranordnung mit wenigstens einem Zugträger (14) umfasst, der in einer Rippe angeordnet ist, wobei
- das Aufzugtragmittel auf einer der Traktionsseite abgewandten Riemenrückseite ein Trägerband (15) aufweist, an dem die Rippen der Rippenanordnung befestigt sind und
- zwischen zwei benachbarten Rippen (13) der Rippenanordnung eine Nut (16) ausgebildet ist, die im Wesentlichen bis zum Trägerband reicht;
**dadurch gekennzeichnet, dass**
- die Zugträger in den Ripper angeordnet sind und das Trägerband berühren.

2. Aufzugsanlage nach Anspruch 1, wobei die Rippen (13) der Rippenanordnung einen Kontaktabschnitt (13.1) mit einem im Wesentlichen trapezförmigen Querschnitt zum Eingriff in entsprechende Rillen des Treibrades (4.1) aufweisen.

3. Aufzugsanlage Anspruch 2, wobei die Rippen (13) der Rippenanordnung einen Sockelabschnitt (13.2) mit einem im Wesentlichen rechteckförmigen Querschnitt zwischen dem Kontaktabschnitt und dem Trägerband aufweisen.

4. Aufzugsanlage nach einem der vorhergehenden Ansprüche, wobei die Zugträger der Zugträgeranordnung als Einfachdraht ausgebildet und/oder aus ein- oder mehrfach verseilten Drähten aufgebaut sind, wobei die einzelnen Drähte aus Stahl und/oder Kunststoff hergestellt sind.

5. Aufzugsanlage nach einem der vorhergehenden Ansprüche, wobei die Rippen aus einem ersten Material hergestellt sind, das ein Elastomer, insbesondere Polyurethan (PU), Polychloropren (CR) und/oder Ethylen-Propylen-Dien-Kautschuk (EPDM) umfasst.

6. Aufzugsanlage nach einem der vorhergehenden Ansprüche, wobei die Rippen ein Härte von 70 bis 100 Shore (A), bevorzugt 75 bis 95 Shore (A) und besonders bevorzugt eine Härte von 80 bis 85 Shore (A) aufweisen.

7. Aufzugsanlage nach einem der vorhergehenden Ansprüche, wobei die Rippen einen keilförmigen bzw. trapezförmigen Querschnitt mit einem Flankenwinkel γ von 60° bis 120°, vorzugsweise von 80° bis 100° aufweisen.

8. Aufzugsanlage nach einem der vorhergehenden Ansprüche, wobei das Trägerband aus einem zweiten Material hergestellt ist, das einen thermoplastischen Kunststoff, insbesondere Polyamid (PA), Polypropylen (PP), Polyethylen (PE), Polycarbonat (PC) oder Polyvinylchlorid (PVC) oder Polyblend und/oder ein Gewebe aus einem solchen thermoplastischem Kunststoff umfasst.

## Claims

1. Lift installation with a drive unit (2) which by way of a drive wheel (4.1) drives at least one lift support means (12) supporting a lift cage (3), wherein the lift support means has on a traction side facing the drive wheel (4.1) a rib arrangement with at least two ribs (13) which extend in longitudinal direction of the lift support means and which engage in corresponding grooves on the drive wheel, wherein the rib arrangement comprises a tensile carrier arrangement with at least one tensile carrier (14) arranged in a rib, wherein
- the lift support means has on a belt back side remote from the traction side a carrier band (15) to which the ribs of the rib arrangement are fastened and
- a groove (16) reaching substantially as far as the carrier band is formed between two adjacent ribs (13) of the rib arrangement;
**characterised in that**,
- the tensile carriers are arranged in the ribs and contact the carrier band.

2. Lift installation according to claim 1, wherein the ribs (13) of the rib arrangement have a contact section (13.1) with a substantially trapezium-shaped cross-section for engagement in corresponding grooves of the drive wheel (4.1).

3. Lift installation according to claim 2, wherein the ribs (13) of the rib arrangement have a base section (13.2) with a substantially rectangular cross-section between the contact section and the carrier band.

4. Lift installation according to any one of the preceding claims, wherein the tensile carriers of the tensile carrier arrangement are constructed as a single wire and/or built up from one or more stranded wires, wherein the individual wires are made of steel and/or synthetic material.

5. Lift installation according to any one of the preceding claims, wherein the ribs are made of a first material comprising an elastomer, particularly polyurethane (PU), polychloroprene (CR) and/or ethylene-propylene-diene rubber (EPDM).

6. Lift installation according to any one of the preceding claims, wherein ribs have a hardness of 70 to 100 Shore (A), preferably 75 to 95 Shore (A) and particularly preferably a hardness of 80 to 85 Shore (A).

7. Lift installation according to any one of the preceding claims, wherein the ribs have a wedge-shaped or trapezium-shaped cross-section with a flank angle γ of 60° to 120°, preferably 80° to 100°.

8. Lift installation according to any one of the preceding claims, wherein the carrier band is made of a second material comprising a thermoplastic plastics material, particularly polyamide (PA), polypropylene (PP), polyethylene (PE), polycarbonate (PC) or polyvinylchloride (PVC) or polyblend and/or a fabric of such a thermoplastic plastics material.

## Revendications

1. Installation d'ascenseur avec une unité d'entraînement (2) qui entraîne par l'intermédiaire d'une poulie motrice (4.1) au moins un élément porteur d'ascenseur (12) qui porte une cabine d'ascenseur (3), l'élément porteur d'ascenseur présentant, sur un côté de traction tourné vers la poulie motrice (4.1), un dispositif à nervures avec au moins deux nervures (13) qui s'étendent dans le sens longitudinal de l'élément porteur d'ascenseur et qui pénètrent dans des rainures correspondantes de ladite poulie, le dispositif à nervures comprenant un dispositif à éléments de traction avec au moins un élément de traction (14) qui est disposé dans une nervure, étant précisé que
- l'élément porteur d'ascenseur présente, sur un côté arrière de courroie opposé au côté de traction, une bande de support (15) à laquelle sont fixées les nervures du dispositif à nervures, et
- qu'il est prévu entre deux nervures voisines (13) du dispositif à nervures une rainure (16) qui va globalement jusqu'à la bande de support,
**caractérisée en ce que** les éléments de traction sont disposés dans les nervures et touchent la bande de support.

2. Installation d'ascenseur selon la revendication 1, dans laquelle les nervures (13) du dispositif à nervures présentent une partie de contact (13.1) à section transversale globalement trapézoïdale qui est destinée à pénétrer dans des rainures correspondantes de la poulie motrice (4.1).

3. Installation d'ascenseur selon la revendication 2, dans laquelle les nervures (13) du dispositif à nervures présentent une partie de base (13.2) à section transversale globalement rectangulaire, entre la partie de contact et la bande de support.

4. Installation d'ascenseur selon l'une des revendications précédentes, dans laquelle les éléments de traction du dispositif à éléments de traction sont conçus comme un fil simple et/ou sont formés à partir de fils à toronnage simple ou multiple, les fils individuels étant fabriqués en acier et/ou en matière plastique.

5. Installation d'ascenseur selon l'une des revendications précédentes, dans laquelle les nervures sont fabriquées à partir d'un premier matériau qui comprend un élastomère, en particulier du polyuréthanne (PU), du polychloroprène (CR) et/ou du caoutchouc éthylène propylène diène (EPDM).

6. Installation d'ascenseur selon l'une des revendications précédentes, dans laquelle les nervures présentent une dureté de 70 à 100 Shore (A), de préférence 75 à 95 Shore (A) et plus spécialement une dureté de 80 à 85 Shore (A).

7. Installation d'ascenseur selon l'une des revendications précédentes, dans laquelle les nervures présentent une section transversale cunéiforme ou trapézoïdale avec un angle de flancs γ de 60° à 120°, de préférence de 80° à 100°.

8. Installation d'ascenseur selon l'une des revendications précédentes, dans laquelle la bande de support est fabriquée à partir d'un second matériau qui comprend une matière thermoplastique, en particulier du polyamide (PA), du polypropylène (PP), du polyéthylène (PE), du polycarbonate (PC) ou du poly(chlorure de vinyle) (PVC) ou un mélange polymère et/ou un tissu composé d'une matière thermoplastique de ce type.
